(19) Europäisches Patentamt
European Patent Office
Office européen des brevets

(11) **EP 2 211 552 A1**

(12) **EUROPEAN PATENT APPLICATION**

(43) Date of publication:
    **28.07.2010 Bulletin 2010/30**

(51) Int Cl.:
    ***H04N 7/26*** (2006.01)

(21) Application number: **09305060.7**

(22) Date of filing: **22.01.2009**

(84) Designated Contracting States:
    **AT BE BG CH CY CZ DE DK EE ES FI FR GB GR HR HU IE IS IT LI LT LU LV MC MK MT NL NO PL PT RO SE SI SK TR**
    Designated Extension States:
    **AL BA RS**

(71) Applicant: **Thomson Licensing**
    **92443 Issy-les-Moulineaux Cedex (FR)**

(72) Inventors:
    • **Yang, Jiheng**
      **100085, Beijing (CN)**

    • **Li, Yumeng**
      **100085, Beijing (CN)**
    • **Zhang, Hui**
      **100085, Beijing (CN)**

(74) Representative: **Hartnack, Wolfgang**
    **Deutsche Thomson OHG**
    **European Patent Operations**
    **Karl-Wiechert-Allee 74**
    **30625 Hannover (DE)**

(54) **Method and device for video coding using macroblock groups**

(57)    In H.264/AVC, intra prediction is performed in units of single macroblocks. The macroblocks in a frame are coded in raster scan order. An improved method for video encoding comprises dividing (eb1) a video image into a plurality of MB groups, determining (eb2) a raster scan type (RST) within a MB group, encoding (eb3) the MBs of the MB group according to the determined raster scan type (RST), wherein intra prediction is used, and generating (eb4) an encoded video stream (Venc). The encoded MB group is inserted as a data block (MBGU) into the video stream. The data block (MBGU) comprises the encoded macroblocks (MBG1) and a macroblock group header (H1,H2) with an indication that indicates the determined raster scan type within the MB group.

Fig.5

EP 2 211 552 A1

## Description

### Field of the invention

This invention relates to a method and a device for video coding, and a method and a device for video decoding.

### Background

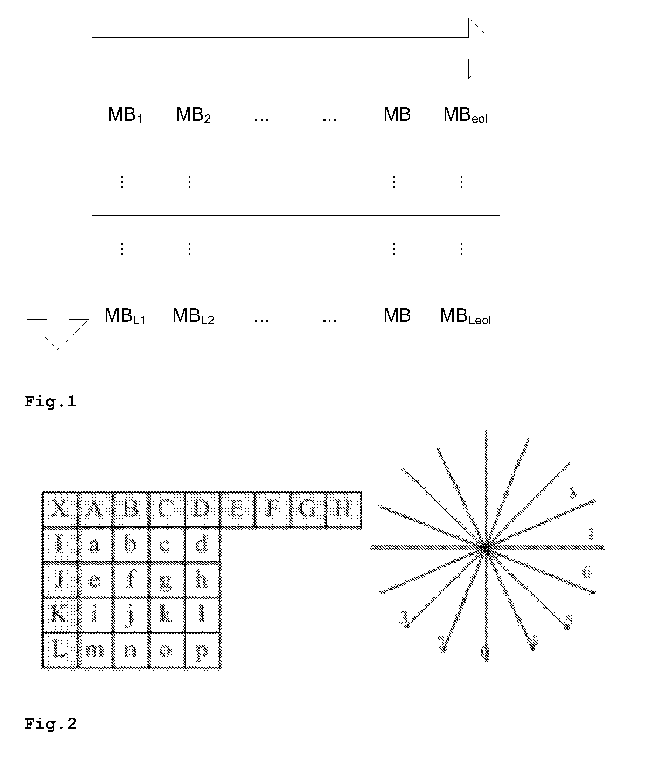

Intra prediction is based on using previously reconstructed data. In H.264/AVC, intra prediction is performed in units of single macroblocks (MB). The macroblocks in a frame are coded in raster scan order. In other words, there is only one fixed MB coding order for the MBs in a frame to perform intra prediction. Fig.1 shows the raster scan order that H.264/AVC uses to implement intra prediction: first all MBs in a row $MB_1, MB_2, ..., MB_{eol}$ are encoded, then the next row of MBs follows and so on, until the last MB in the last row $MB_{L1}, MB_{L2}, ..., MB_{Leol}$ is encoded.

Each MB contains a plurality of blocks, typically 4x4 or 8x8 blocks. Within each MB, different raster scan orders for the blocks are allowed. Limited by the linear MB raster scan order, a MB can use data from the left and/or upper reconstructed MB to perform intra prediction. It is the same with 4x4 blocks inside the MB: the predictors of various modes of all variable-size blocks are limited to the left and upper neighbors. Taking 4x4 block intra prediction as an example, the predictors and the prediction directions are shown in Fig.2. In one mode, indicated by predictor 1, horizontal prediction from left to right is used. E.g. blocks a,b,c,d are successively predicted from block I of the neighboring MB. All available prediction modes predict either left-to-right or up-down, except mode 2 which predicts based on an average DC value (not shown in Fig.2).

### Summary of the Invention

The present invention improves intra-prediction in various aspects.

According to one aspect of the invention, multiple MBs are grouped for being encoded. Each group of MBs is intra-coded as a separate encoding unit, wherein different raster scan orders within a group are possible. The employed raster scan order is indicated by an indication, e.g. flag.

Usually a group comprises MBs that belong to at least two lines and at least two columns of MBs. In a basic embodiment, a MB group covers a rectangular area of MxN MBs (N > 1 or M > 1). The invention is particularly useful for embodiments where both, N > 1 and M > 1, because more different raster scan orders are possible to be used.

According to one aspect of the invention, a MB group based intra prediction method is disclosed, wherein reconstructed MBs right and/or below a current MB are available for prediction, besides the left and upper reconstructed MBs, depending on the employed raster scan type. New raster scan types may be used, including bi-directional prediction, right-to-left prediction and/or down-up prediction.

According to one aspect of the invention, an enhanced encoding syntax for MB group encoded video comprises encoding units, each comprising a MB group with a plurality of MBs and a MB group raster scan indication. The order of the MBs within the MB group and within the encoding unit is variable. The encoding/decoding order of MBs is indicated by a MB group raster scan indication. In one embodiment, the encoded MBs are put into the encoding unit in the order of their encoding, and can be retrieved from the encoding unit in the order of their encoding/decoding.

According to one aspect of the invention, a video encoder comprises means for dividing a video image into a plurality of MB groups, means for determining an individual raster scan type within a MB group, means for encoding the MBs of the MB group using intra prediction according to the determined raster scan type, and means for forming or generating an encoded video stream, wherein a MB group header with a raster scan type indication is inserted into the video stream. In one embodiment, the encoded MBs of the MB group are inserted into the video stream in the order of their encoding.

According to one aspect of the invention, a new context generation scheme according to the new intra prediction framework comprises analyzing a current MB group raster scan type and a current MB position, and depending on both determining for the current MB a prediction mode, wherein for the determining additionally a predictor indication may be used. The predictor indication may be similar to the conventional direction predictors of Fig.2. However, while a conventional predictor needs to be unique with respect to all existing prediction directions (nine in Fig.2), the enhanced predictor indication needs to be unique only with respect to the current MB position and the already reconstructed neighboring MBs of the current MB group.

The above-mentioned aspects may be applied alone or combined. Advantageous embodiments of the invention are disclosed in the dependent claims, the following description and the figures.

**Brief description of the drawings**

Exemplary embodiments of the invention are described with reference to the accompanying drawings, which show in

Fig.1 raster scan order used in H.264/AVC in intra frame coding,
Fig.2 a 4x4 block with its boundary pixels and 9 intra prediction modes,
Fig.3 MB groups of MxN MBs for a frame-size of WxH MBs,
Fig.4 different prediction circumstances of a MB group,
Fig.5 sample coding orders for a 2x2 MB group with different neighborhood circumstances,
Fig.6 sample 16x16 prediction modes for MBs in left-up circumstance,
Fig.7 sample 16x16 prediction modes for MBs in up-down circumstance,
Fig.8 sample 16x16 prediction modes for MBs in left-up-down circumstance,
Fig.9 sample 16x16 prediction modes for MBs in left-up-right-down circumstance,
Fig.10 sample prediction modes for 4x4 blocks in left-up circumstance,
Fig.11 sample prediction modes for 4x4 blocks in up-down circumstance,
Fig.12 sample prediction modes for 4x4 blocks in left-up-right circumstance,
Fig.13 sample prediction modes for 4x4 blocks in left-up-right-down circumstance,
Fig.14 start blocks in a MB,
Fig.15 coding orders with different start blocks,
Fig.16 an exemplary encoded video stream,
Fig.17 the order of the MBs in an encoded stream, and
Fig.18 the structure of an encoder and a decoder.

**Detailed description of the invention**

The present invention may improve intra prediction design, e.g. of the current H.264/AVC standard, at least in the following aspects:

First, a group of MBs may be encoded in the order that generates minimum rate-distortion (R-D) cost.
Second, a new intra prediction method is employed when right and/or down reconstructed MBs are available, besides the left and up reconstructed MBs.
Third, a new syntax for the MB layer is designed, and a new context generation scheme is proposed according to the new intra prediction framework.

To achieve above mentioned improvements, a MB group based intra prediction framework and method is proposed, e.g. for H.264/AVC. Advantages of the proposed method are that it achieves much better coding efficiency and also allows parallel execution, which makes parallel implementations possible. The coding order of MBs inside a group is selected by choosing the lowest R-D cost of all possible coding orders (i.e. rate-distortion optimization (RDO) is used), while the bit-stream structure is re-organized corresponding to the selected coding order.

An input frame is divided into several different groups of MBs. Each group is coded as one unit. The different groups are coded in a raster scan order. Different coding orders of MBs in one group are tested in order to find the best coding order with the lowest R-D cost of the group. The chosen coding order of the MB group is indicated in the bit-stream to ensure correct decoding.

Instead of using a MB as a unit for intra prediction, a group of MBs is used as a unit for intra prediction. Many different kinds of coding orders of MBs in one group can be performed to get the lowest R-D cost in intra prediction.

1. Macroblock group

In H.264/AVC, a frame is divided into 16x16 MBs which are coded in raster scan order. According to the invention, an input frame is divided into groups of MBs with e.g. MxN MBs per group. The different groups can be encoded/decoded in raster scan order, i.e. linear. However, one advantage of the invention is that different MB groups can be encoded/decoded in parallel, as long as for the processed MB groups the required neighboring MB groups are available for prediction. Further, parallel processing of some MBs within a MB group may be possible, depending on the prediction mode.

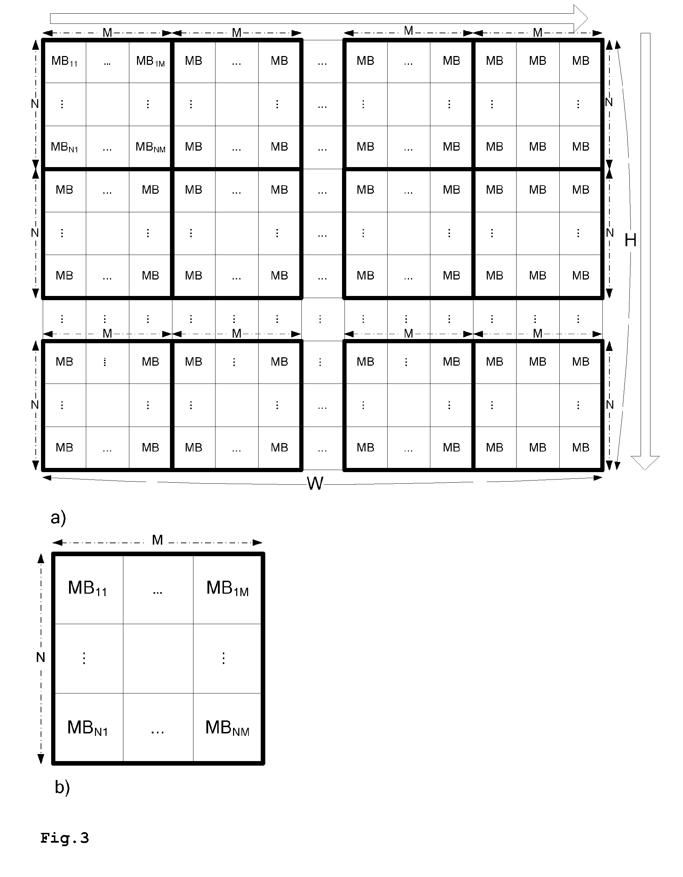

An exemplary proposed formation of MB groups in a frame is shown in Fig.3 a), where the frame width is W MBs and the frame height H MBs. The MB group size chosen here is MxN MBs. It is to be noted here that although in this example all MB groups have same size, the MB group size may in principle vary within a frame. In that case, the required processing and buffering capacity is higher and another indication is used for indicating the current MB group size. However, the MBs of a MB group are always adjacent to each other, so that a MB group is a coherent area of the picture. MB groups are easily coded in raster scan order line-by-line (in terms of lines of MB groups). However, each MB group has its own internal MB raster scan order for scanning its MxN MBs. One exemplary MB groups is shown in Fig.3 b). Other than creating a "super MB", the encoded MBs that belong to the MB group are still separate from each other (e.g. the MB structure is maintained in the encoded signal), but new intra prediction modes may be employed within a MB group, as will be explained in the following.

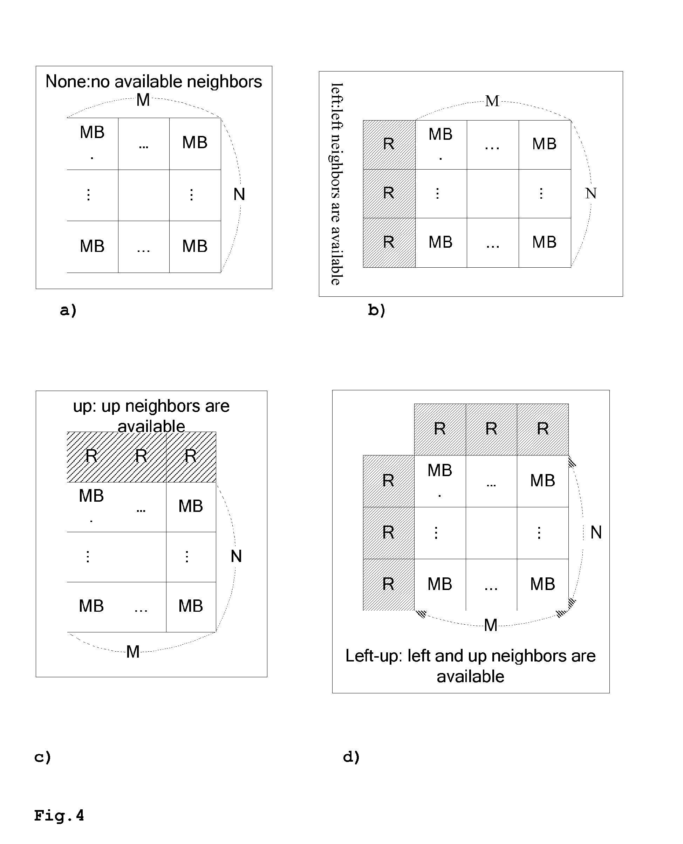

Due to the linear raster scan order used for the MB groups, four different so-called neighborhood circumstances exist for MB groups: none, left, up, or left-up. These are shown in Fig.4. Each MB group may use intra prediction also from left or upper neighbor groups, like it was conventionally done for single MBs.

## 2. Coding Order

Different possibilities of coding orders for MBs in a group can be chosen to perform intra prediction, according to different neighborhood circumstances of the MB group.

R-D costs of a MB group in different coding orders are compared to get the best coding order, i.e. the coding order with the lowest R-D cost. The coding order is written into the resulting bit-stream to ensure correct decoding. Detailed syntax examples are listed below.

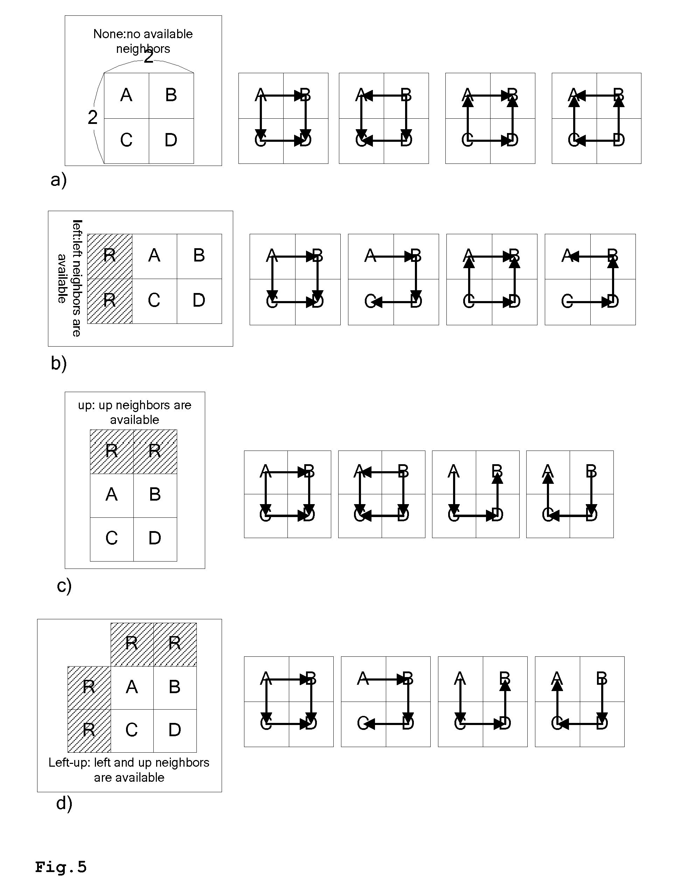

To illustrate the idea further, a 2x2 MB group is taken as an example. The neighborhood status and four sample coding orders of the 2x2 MB group are shown in Fig.5. It is to be noted that the coding orders can be designed flexibly, using in principle any sequential or parallel combination of the MBs in order to reach optimal coding performance.

It is however to be considered that not all possible coding orders are useful, particularly for MB groups larger than 2x2 MBs. These MB groups can use specific sets of MB coding order options similar to the 2x2 MB group case. The design of the coding order can be customized to guarantee maximum coding efficiency. In one embodiment of the invention only some pre-defined coding orders are allowed for MB groups, depending on the current neighborhood situation. This has at least two advantages:

First, the processing load during encoding is lower because fewer choices need to be investigated. Second, the scan type indication may be shorter, because fewer options are available. At least in the case of linear scanning of the MB groups, a particular scan type indication for a MB group can indicate different raster scan types, depending on the neighborhood situation of the MB group. E.g. a scan type indication may indicate a particular raster scan type in a MB group that has an upper neighbor MB group, and indicate a different raster scan type in a MB group that is on the upper edge and therefore has no upper neighbor.

## 3. Prediction mode

In the proposed method, one MB may use also right or down reconstructed MBs to perform intra prediction. Thus the neighborhood circumstances for one MB increase from four (none, left, up, left-up) in H.264/AVC to sixteen (none, left, up, right, down, right-down, etc.). New prediction modes for intra16x16 are proposed in chapter 3.1 to deal with new neighborhood circumstances. New prediction modes for intra4x4 are proposed in chapter 3.2 for the same reason with intra16x16. It is recalled here that intra prediction usually comprises predicting a current MB from a reconstructed MB, determining the difference which is known as residual, and entropy coding the residual, and that decoding usually comprises entropy decoding received video data, wherein residuals are obtained, performing prediction using previously reconstructed MBs and adding the prediction result and the residual.

## 3.1 Intra 16x16 prediction mode

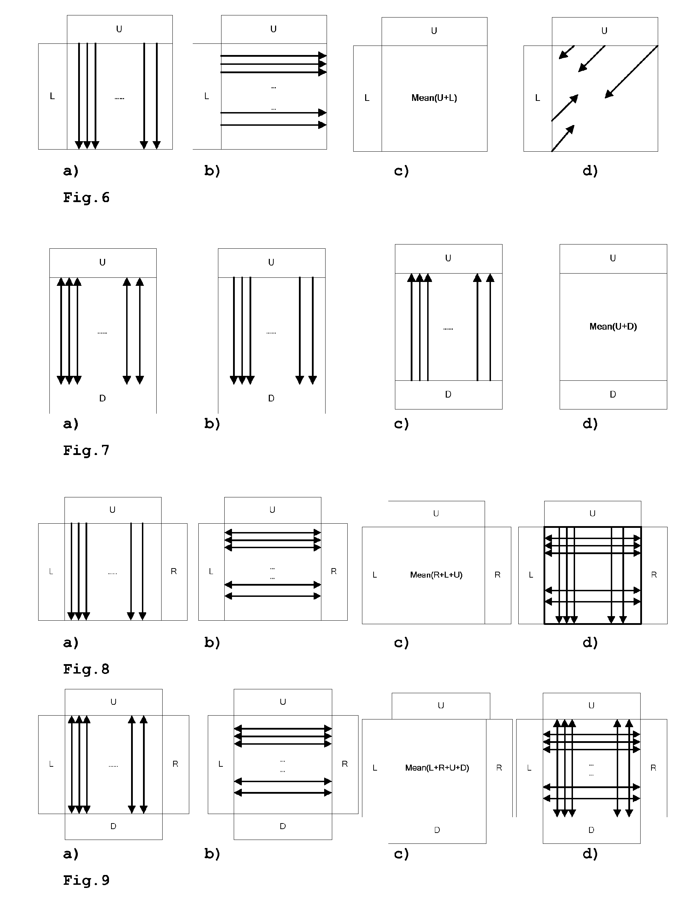

Exemplary Intra 16x16 prediction modes are shown in figures 6-9. However, in principle the prediction modes for different circumstances can be designed flexibly, using all available neighbors, in order to get an optimal prediction.

Fig.6 shows four sample prediction modes in a case where left and up neighbors are available. Similar prediction modes can be constructed in neighboring MB availability circumstances of up-right, right-down and down-left. In Fig.6 a), it is optimal to use pure vertical intra prediction downwards. In Fig.6 b), a horizontal intra prediction left-to-right is optimal. In Fig.6 c), intra prediction is done using an average DC value of upper and left neighbor. Fig.6 d) is a case where diagonal intra prediction is optimal. The cases a)-c) mainly correspond to conventional intra prediction encoding modes, as shown in Fig.2.

When up and down neighbors are available, as it may happen for MBs within a MB group, sample prediction modes as shown in Fig.7 are available. Similar prediction modes can be constructed in neighboring MB availability circumstance of left-right. Fig.7 a) shows a case where bi-linear vertical intra prediction is optimal. Fig.7 b) shows vertical downwards intra prediction, Fig.7 c) vertical upwards intra prediction and Fig.7 d) intra prediction base on DC average of upper and lower neighbor.

When three neighbors are available, as it may happen for MBs within a MB group, sample prediction modes are as shown in Fig.8 which takes left-up-right as an example. In Fig.8a), it is optimal (in terms of RDO) to use vertical intra prediction downwards, although left and right neighbors are also available. In Fig.8 b), bi-linear intra prediction is shown between neighbors opposite to each other, i.e. left and right MBs. Fig. 8d) shows an intra prediction mode that combines both, e.g. by superposition, and Fig.8 c) shows intra prediction based on DC average of the available neighbor MBs.

When all four neighbors of a MB are available, as it may happen for MBs within a MB group, sample prediction modes are as shown in Fig.9. Fig.9 a) shows a case where, in this neighborhood circumstance, bi-linear vertical intra prediction between upper and lower neighbor gives optimal encoding results. In Fig.9 b), bi-linear intra prediction between neighbors opposite to each other is optimal, in this case left and right MBs. Fig. 9 d) shows an intra prediction mode using a combination of vertical and horizontal bi-linear intra prediction, and Fig.9 c) shows intra prediction based on DC average of the available neighbor MBs.

Though the cases shown in Figs.6-9 are exemplary, they provide a good set of allowed choices for intra predicting 16x16 MBs. That is, for each 16x16 MB within a MB group it may be determined which of the neighborhood circumstances apply, and which of the prediction modes shown is optimal. Further, in one embodiment it is sufficient to use a 2-bit intra prediction type indication per MB, since depending on the neighborhood circumstances always four MB prediction modes are allowed. E.g. if a MB intra prediction indication indicates "Mode 1", it may mean vertical intra prediction downwards if for the current MB left and up neighbors are available, as in Fig.6 a). But the same indication may mean bi-directional vertical prediction if for the current MB up and down neighbors are available, as in Fig.7 a). Thus, the indication requires fewer bits, since its meaning depends on the available neighbor MBs. This is pre-determined due to the raster scan order of the MB group, which defines the sequential order of encoding and decoding the MBs within the MB group.

It has been found that for 16x16 intra prediction it is very hard to predict in a diagonal mode using the upper and bottom (or left and right) predictors, since then the average accuracy is not good. Diagonal modes may therefore be skipped in these cases. Instead, prediction modes that use bi-linear interpolation usually give better results. In certain cases however, e.g. for certain sequences, it may still be beneficial to employ diagonal modes.

### 3.2 Intra 4x4 prediction modes

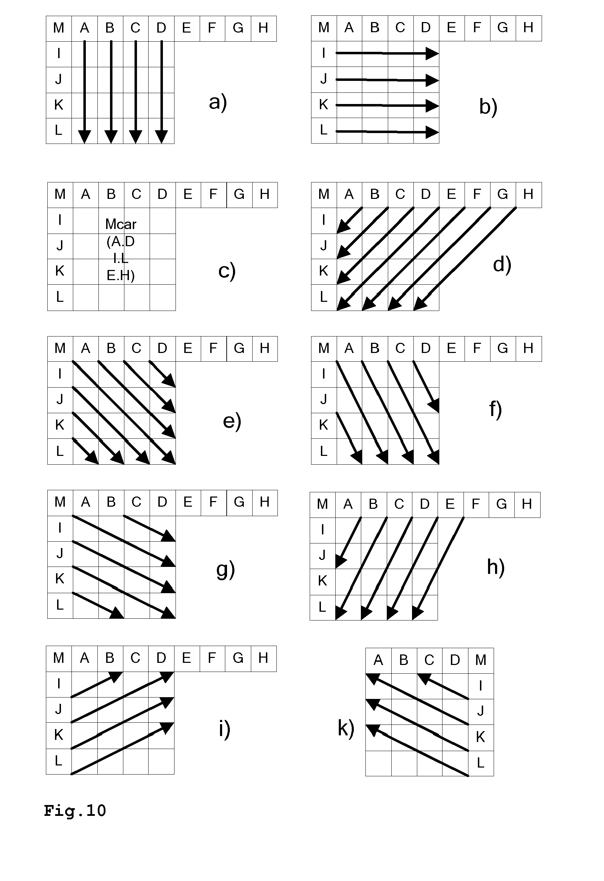

Intra4x4 prediction modes in the proposed method are shown in Figs.10-13. It is to be noted that the prediction modes for different circumstances can be designed flexibly using all available neighbors in order to get optimal prediction.

When left and up neighbors are available, sample prediction modes as shown in Fig.10 a)-i) can be used. There are similar prediction modes in the other neighboring 4x4 block availability circumstances: up-right, right-down and down-left. As an example, Fig.10 k) shows a case where up and right neighbors are available. All the new modes disclosed herein allow enhanced video coding and data compression.

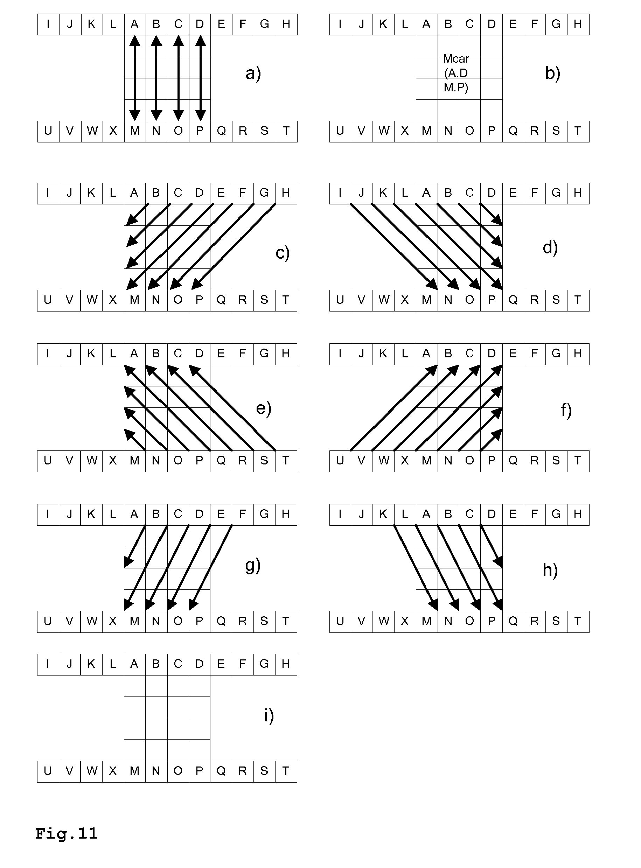

When up and down neighbors are available, sample prediction modes as shown in Fig.11 may be used. There are similar prediction modes in neighboring 4x4 block availability circumstance of left-right. Fig.11 a) shows a bi-linear intra prediction between up and down neighbors.

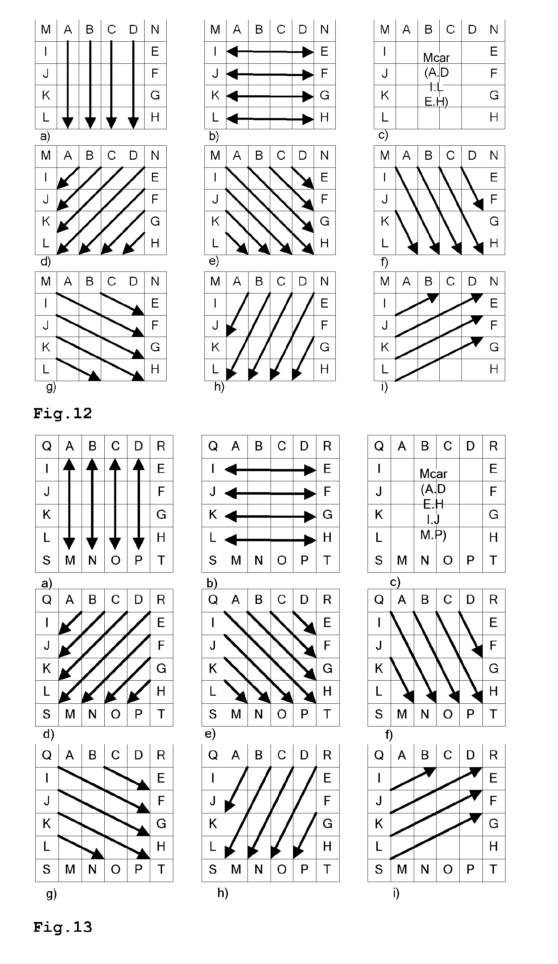

When there are three neighbor MBs available, sample prediction modes are exemplarily shown in Fig.12, which takes left-up-right as an example. E.g. Fig.12 b) shows a bi-linear intra prediction between left and right neighbors.

When all four neighbor MBs of a 4x4 MB are all available, sample prediction modes are shown in Fig.13. E.g. Fig.13 a) and b) show bi-linear intra prediction (that is: intra prediction using bi-linear interpolation).

For 4x4 blocks, the proposed modes are much more delicate than the conventional modes, since they cover more texture prediction direction possibilities. The conventional DIAG mode for 16x16 is only a 45 degree prediction. As shown in the above-mentioned figures, we have as an additional mode 26.6 degree prediction in different directions.

### 4. Entropy coding related update

In H.264/AVC, a context model of entropy coding methods, namely CAVLC and CABAC, is limited to left and upper neighbors. In the proposed method, changes oriented to the right or down neighbors are made to the context model of entropy coding methods.

### 4.1 Coding orders of 4x4 blocks in MB

The starting 4x4 block is determined by the following formula:

$$start4x4block=B_i, \quad (i=Max(E_i<<2 \mid P_i)) \qquad (1)$$

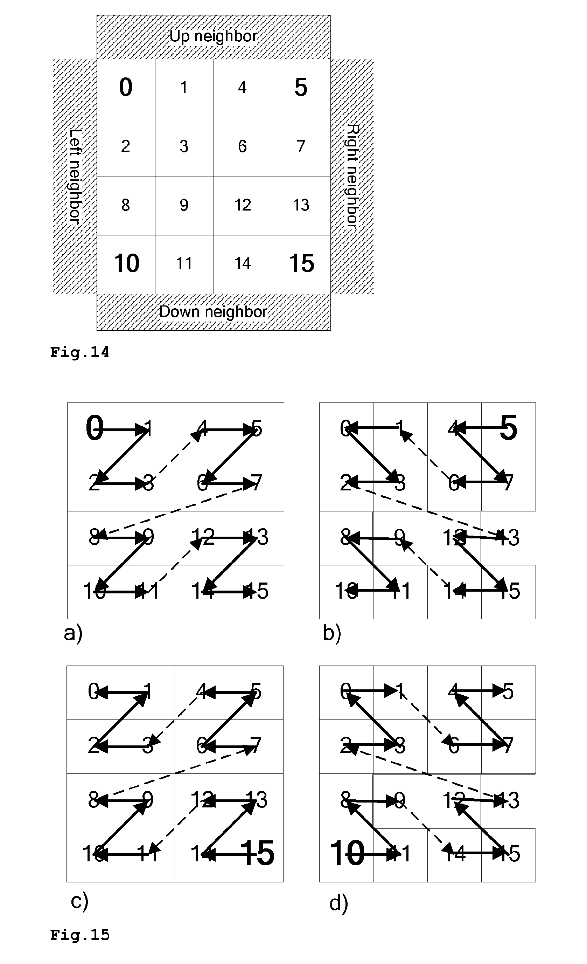

where $B_0$, $B_1$, $B_2$ and $B_3$ equal to block 0, 5, 15 and 10 (as shown in Fig.14) correspondingly, and priority levels $P_0$=0x03, $P_1$=0x02, $P_2$=0x01 and $P_3$=0x00 are given to Bo, $B_1$, $B_2$ and $B_3$, and where $E_0$, $E_1$, $E_2$ and $E_3$ equal the number of reconstructed neighbor MBs of block $B_0$, $B_1$, $B_2$ and $B_3$.

Four different coding orders towards four different starting blocks are shown in Fig.15. The block with the emphasized number is the starting block in the corresponding coding order.

It is to be noted that coding orders of 4x4 blocks in MB can be according to Fig.15, or according to the intra prediction order in intra4x4 prediction.

<u>4.2 CAVLC context update</u>

The following is an embodiment using CAVLC (Content-adaptive Variable Length Coding). In an encoding process for total number of transform coefficient levels and trailing ones in H.264/AVC, the following operations can be implemented. When the CAVLC encoding process is invoked for Intra16x16DCLevel, luma4x4BlkIdx is set equal to 0. nA and nB are the number of non-zero transform coefficient levels in the block of transform coefficient levels blkA located to the left of the current block and the block of transform coefficient levels blkB located above the current block, respectively.

Given the values of nA and nB, the variable nC is derived as follows.

If both mbAddrA and mbAddrB are available, the variable nC is set equal to $( nA + nB + 1 ) >> 1$.

Otherwise (mbAddrA is not available or mbAddrB is not available), the variable nC is set equal to nA + nB. When the CAVLC encoding process is invoked for intra16x16DCLevel, luma4x4BlkIdx is set equal to the index of the starting block described in chapter 4.1 .

Let currBlkAddrA, currBlkAddrB, currBlkAddrE, currBlkAddrF be the availability of left, up, right, down block of current 4x4 blocks. Let nE and nF be the number of non-zero transform coefficient levels in the block of transform coefficient levels located to the right of the current block and the block of transform coefficient levels located below the current block, respectively.

Given the values of nA, nB, nE and nF, currBlkAddrA, currBlkAddrB, currBlkAddrE and currBlkAddrF, the variable nC is derived as follows.

If all of currBlkAddrA, currBlkAddrB, currBlkAddrE and currBlkAddrF are available, the variable nC is set equal to $(nA+nB+nE+nF+2) >> 2$.

If currBlkAddrA, currBlkAddrB, currBlkAddrE are available, the variable nC is set equal to $(nA+nB+nE+1.5)/3$. Other circumstances with three neighbors available can be derived similarly from above formula.

If currBlkAddrA and currBlkAddrB are available, the variable nC is set equal to $(nA+nB+1)>>1$. Other circumstances with two neighbors available can be derived similarly from above formula.

If currBlkAddrA is available, the variable nC is set equal to nA. Other circumstances with one neighbor available can be derived similarly.

<u>4.3 CABAC context update</u>

The following is an embodiment using CABAC (Content-based Adaptive Binary Arithmetic Coding). In an encoding process for MB layer syntax in H.264/AVC, CABAC uses left and upper neighbors to code the MB layer syntax elements. In the proposed method, right and down neighbors are added to code the MB layer syntax element.

For each syntax element at MB layer in the syntax table, the variable ctxIdxInc is derived as

$$ctxIdxInc = condTermFlagA + condTermFlagB.$$

CondTermFlagA and condTermFlagB are availability of left and upper MBs.

In the proposed method, the variable ctIdxInc is calculated as follows:

$$ctxIdxInc = Sum>2 \; ? \; 2 \; : \; Sum$$

$$Sum = (condTermFlagA + condTermFlagB + condTermFlagE + condTermFlagF)$$

CondTermFlagE and condTermFlagF are variables standing for the availability of right and down MBs.

5 Syntax update for H.264/AVC

The following is an embodiment where the invention is used to enhance the H.264/AVC video coding standard. Syntax element mb_order_in_group is proposed to add into macroblock_layer syntax table in order to notify the decoder of the decoding order of MBs in one group. Syntax element block_in_mb added to mb_pred syntax table in order to notify the decoding order of the 4x4 blocks within a MB.

The syntax for the proposed macroblock_layer() is shown in Tab.1. It is noted here that this kind of syntax is known to define actually the structure of a bit-stream fraction. In the example of Tab.1, the defined bit-stream fraction is on MB layer, and if a previously read flag IndexInMBGroup been set to zero, the first two bits of the bit-stream indicate mb_order_in_group, and the next two bits as mb_type. Otherwise, the first two bits of the bit-stream are interpreted as mb_type, and so on.

The variable IndexInMBGroup stands for the order of the MB in its group according to the coding path.

The new element mb_order_in_group indicates the decoding order of MBs in one group. While in this example it has two bits, it may have more bits if more intra prediction modes are defined as being allowed. The remaining parameters are defined as the standard.

Table 1: Macroblock layer syntax

| macroblock_layer( ) { | C | Descriptor |
|---|---|---|
| if( IndexInMBGroup = = 0 ) | | |
| **mb_order_in_group** | 2 | ue(v)\| ae(v) |
| **mb_type** | 2 | ue(v) \| ae(v) |
| if( mb_type = = I_PCM ) { | | |
| while( !byte_aligned() ) | | |
| **pcm_alignment_zero_bit** | 2 | f(1) |
| for( i = 0; i < 256 * ChromaFormatFactor; i++) | | |
| **pcm_byte[ i ]** | 2 | u(8) |
| } else { | | |
| if( MbPartPredMode( mb_type, 0 ) != Intra_4x4 && MbPartPredMode( mb_type, 0 ) != Intra_16x16 && NumMbPart( mb_type ) = = 4 ) | | |
| sub_mb_pred( mb_type ) | 2 | |
| Else | | |
| mb_pred( mb_type ) | 2 | |
| if( MbPartPredMode( mb_type, 0 ) != Intra_16x16 ) | | |
| **coded_block_pattern** | 2 | me(v)\| ae(v) |
| if( CodedBlockPatternLuma > 0 \|\| CodedBlockPatternChroma > 0 \|\| MbPartPredMode( mb_type, 0 ) = = Intra_16x16 ) { | | |
| **mb_qp_delta** | 2 | se(v) \| ae(v) |
| residual( ) | 3\|4 | |
| } | | |
| } | | |
| } | | |

The syntax for a proposed MB prediction is shown in Tab.2.

The variable IndexInMB stands for the order of 4x4 blocks in MB in the coding path. The element block_order_in_mb indicates the decoding order of 4x4 blocks in one MB. The remaining parameters are defined as in the standard.

## EP 2 211 552 A1

Table 2: Macroblock prediction syntax

| mb_pred( mb_type ) { | C | Descriptor |
|---|---|---|
| if( MbPartPredMode( mb_type, 0 ) == Intra_4x4 \|\| MbPartPredMode( mb_type, 0 ) == Intra_16x16 ) { | | |
| if( MbPartPredMode( mb_type, 0 ) == Intra_4x4 ) | | |
| if( IndexInMB == 0 ) | | |
| **block_order_in_mb** | 2 | ue(v) \| ae(v) |
| for( luma4x4BlkIdx=0; luma4x4BlkIdx<16; luma4x4BlkIdx++ ) { | | |
| **prev_intra4x4_pred_mode_flag[** luma4x4BlkIdx **]** | 2 | u(1) \| ae(v) |
| if( !prev_intra4x4_pred_mode_flag[ luma4x4BlkIdx ] ) | | |
| **rem_intra4x4_pred_mode[** luma4x4BlkIdx **]** | 2 | u(3) \| ae(v) |
| } | | |
| **intra_chroma_pred_mode** | 2 | ue(v) \| ae(v) |
| } else if( MbPartPredMode( mb_type, 0 ) != Direct ) { | | |
| for( mbPartIdx = 0; mbPartIdx < NumMbPart( mb_type ); mbPartIdx++) | | |
| if( ( num_ref_idx_l0_active_minus1 > 0 \|\| mb_field_decoding_flag ) && MbPartPredMode( mb_type, mbPartIdx ) != Pred_L1 ) | | |
| **ref_idx_l0[** mbPartIdx **]** | 2 | te(v) \| ae(v) |
| for( mbPartIdx = 0; mbPartIdx < NumMbPart( mb_type ); mbPartIdx++) | | |
| if( ( num_ref_idx_l1_active_minus1 > 0 \|\| mb_field_decoding_flag ) && MbPartPredMode( mb_type, mbPartIdx ) != Pred_L0 ) | | |
| **ref_idx_l1[** mbPartIdx **]** | 2 | te(v) \| ae(v) |
| for( mbPartIdx = 0; mbPartIdx < NumMbPart( mb_type ); mbPartIdx++) | | |
| if( MbPartPredMode ( mb_type, mbPartIdx ) != Pred_L1 ) | | |
| for( compIdx = 0; compIdx < 2; compIdx++ ) | | |
| **mvd_l0[** mbPartIdx **][** 0 **][** compIdx **]** | 2 | se(v) \| ae(v) |
| for( mbPartIdx = 0; mbPartIdx < NumMbPart( mb_type ); mbPartIdx++) | | |
| if( MbPartPredMode( mb_type, mbPartIdx ) != Pred_L0 ) | | |
| for( compIdx = 0; compIdx < 2; compIdx++ ) | | |
| **mvd_l1[** mbPartIdx **][** 0 **][** compIdx **]** | 2 | se(v) \| ae(v) |
| } | | |
| } | | |

### Bit stream structure

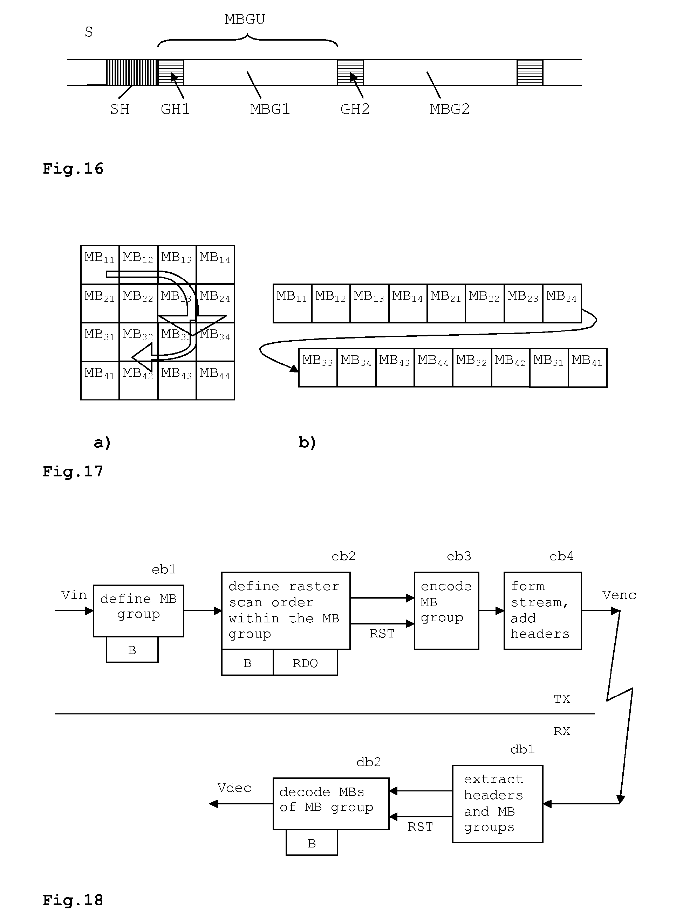

Fig.16 shows an exemplary bit-stream with encoded video according to the invention. The stream S comprises at least one (though usually many) MB group encoding units MBGU, where each unit comprises two portions: one portion GH1 for structural information, such as a header, and one portion MBG1 for the actual image data. The image data are MB data (mostly residual data) of the MBs that belong to the MB group, and the structural information comprises decoding information, namely the order of encoding. The same order is to be used for decoding the MBs of the group.

Fig.17 shows an example of intra-prediction within a MB group, and how the single MBs will be ordered within the stream. It is in principle as Fig.5b), second case, but with a larger MB group (4x4 instead of 2x2). Some MBs MB31,MB41,MB32,MB42 can be bi-directionally predicted in this case. Fig.17 b) shows a corresponding fraction of the encoded bit-stream. In this embodiment the order of MBs within the stream depends on the decided prediction order.

Fig.18 shows the structure of an exemplary encoder in the upper portion and an exemplary decoder in the lower portion. Conventional parts are omitted. Buffers B are used when the MBs of a MB group are ordered or re-ordered.

The encoder comprises at least the following units: a section generating unit eb1 with means for dividing a video image into a plurality of MB groups, a raster scan type determining unit eb2 with means for determining a raster scan type RST from a plurality of raster scan types within a MB group, an encoding unit eb3 with means for encoding the MBs of the MB group according to the determined raster scan type, and a stream generating unit eb4 with means for generating an encoded video stream, wherein the MB group is inserted as a data block into the video stream. The data block comprises the encoded MBs and a MB group header with an indication indicating the determined raster scan type, so as to enable decoding. The encoding unit eb3 uses intra prediction. The encoded video data Venc are then transmitted, including possible storage.

On the receiver side RX, a decoder comprises a data extraction unit db1 with means for extracting from received video data an encoding unit that comprises a group of MBs and a MB group header, as shown in Fig.16, wherein the MB group header comprises a raster scan type indication. The decoder further comprises a decoding unit db2 with means for decoding the group of MBs, wherein intra prediction is used and wherein the order of the MBs within said group of MBs is determined by said raster scan type indication. When the single MBs are decoded as described above, conventional decoding steps may follow. A buffer B is available in the decoding unit db2, for re-ordering the MBs of an image so that subsequent conventional steps can be performed.

As described above, various advantageous embodiments of the invention are possible, as follows.

In one embodiment, a video encoder comprises means for dividing a video image into a plurality of MB groups, means for determining one of a plurality of raster scan types within a MB group, means for encoding the MBs of the MB group according to the determined raster scan type, wherein intra prediction is used, and means for generating an encoded video stream, wherein the MB group is inserted as a data block into the video stream, the data block comprising the encoded MBs and a MB group header with an indication indicating said determined raster scan type.

In one embodiment of the video encoder, said means for determining a raster scan type within a MB group further comprises means for comparing the encoding results of different raster scan types, wherein RDO is used, and means for selecting the raster scan type with minimum RDO.

In one embodiment, a video decoder comprises means for extracting from received video data at least one encoding unit that comprises a group of MBs and a MB group header, wherein the MB group header comprises a raster scan type indication, and means for decoding the group of MBs, wherein intra prediction is used and wherein the order of the MBs within said group of MBs is determined by said raster scan type indication.

In one embodiment of the video encoder and/or the video decoder, intra prediction is performed within the MB group across MB boundaries.

In one embodiment, a method for video encoding comprises steps of dividing a video image into a plurality of MB groups, determining one of a plurality of raster scan type within a MB group, encoding the MBs of the MB group according to the determined raster scan type, wherein intra prediction is used, and generating an encoded video stream, wherein the encoded MB group is inserted as a data block into the video stream, the data block comprising the encoded MBs and a MB group header with an indication indicating said determined raster scan type.

In one embodiment of the method for video encoding, said step of determining a raster scan type within a MB group further comprises steps of comparing the encoding results of different raster scan types, wherein RDO is used for the comparing, and selecting the raster scan type with minimum RDO.

In one embodiment, a method for video decoding comprises steps of extracting from received video data at least one encoding unit that comprises a group of MBs and a MB group header, wherein the MB group header comprises a raster scan type indication, and decoding the group of MBs, wherein intra prediction is used and wherein decoding order of the MBs within said group of MBs is determined by said raster scan type indication.

In one embodiment of the method for video encoding and/or the method for video decoding and/or the video encoder and/or the video decoder, bi-directional intra prediction is performed between two MBs opposite to each other for at least one MB.

In one embodiment of the method for video encoding and/or the method for video decoding and/or the video encoder and/or the video decoder, a group of MBs comprises NxM MBs, with N being at least two MB lines or M being at least two MB columns. In an embodiment, both N and M are more than 1.

In one embodiment of the method for video encoding and/or decoding, said MB header further comprises a start position indicating the position of the first MB.

In one embodiment of the method for decoding, at least one of said MBs comprises a MB intra prediction indication that is unique only within the context of said MB, the method further comprising steps of determining for said at least one MB which neighbor MBs have already been reconstructed, depending on the available reconstructed neighbor blocks, determining from said MB intra prediction indication an intra prediction mode, and encoding or decoding the MB according to said determined intra prediction indication.

In one embodiment, an encoded video signal comprises at least one encoding unit, wherein the encoding unit comprises a header comprising a raster scan type indication that refers to a MB group, and a MB group that comprises a plurality of encoded MBs, wherein the MBs are intra predicted and wherein the encoding order and/or decoding order of the MBs within said MB group is indicated by said raster scan type indication.

In one embodiment, the encoded video signal comprises at least two encoding units and further comprises a higher order header that comprises a default raster scan type indication for said plurality of encoding units, wherein the default raster scan type indication may be overruled by each encoding units' MB group header.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two. Reference numerals appearing in the claims are by way of illustration only and shall have no limiting effect on the scope of the claims.

**Claims**

1. Video encoder comprising

   - means (eb1) for dividing a video image into a plurality of macroblock groups;
   - means (eb2) for determining a raster scan type within a macroblock group;
   - means (eb3) for encoding the macroblocks of the macroblock group according to the determined raster scan type, wherein intra prediction is used; and
   - means (eb4) for generating an encoded video stream (Venc), wherein the MB group is inserted as a data block (MBGU) into the video stream, the data block comprising the encoded macroblocks (MBG1) and a macroblock group header (H1,H2) with an indication indicating said determined raster scan type.

2. Video encoder according to claim 1, wherein said means (eb2) for determining a raster scan type within a macroblock group further comprises

   - means for comparing the encoding results of different raster scan types, wherein RDO is used; and
   - means for selecting the raster scan type with minimum RDO.

3. Video decoder comprising

   - means (db1) for extracting from received video data at least one encoding unit that comprises a group of macroblocks and a macroblock group header (H1), wherein the macroblock group header (H1) comprises a raster scan type indication; and
   - means (db2) for decoding the group of macroblocks, wherein intra prediction is used and wherein the order of the macroblocks within said group of macroblocks is determined by said raster scan type indication.

4. Video encoder according to claim 1 or 2 or video decoder according to claim 3, wherein bi-directional intra prediction is performed for at least one macroblock.

5. Video encoder according to claim 1, 2 or 4 or video decoder according to claim 3 or 4, wherein a group of macroblocks comprises NxM macroblocks, with N being at least two macroblock lines and M being at least two macroblock columns.

6. Video encoder according to claim 1, 2, 4 or 5 or video decoder according to claim 3, 4 or 5, wherein intra prediction is performed within the macroblock group across macroblock boundaries.

7. Method for video encoding, comprising steps of

   - dividing (eb1) a video image into a plurality of macroblock groups;
   - determining (eb2) a raster scan type (RST) within a macroblock group;
   - encoding (eb3) the macroblocks of the macroblock group according to the determined raster scan type (RST), wherein intra prediction is used; and
   - generating (eb4) an encoded video stream (Venc), wherein the encoded macroblock group is inserted as a data block (MBGU) into the video stream, the data block comprising the encoded macroblocks (MBG1) and a macroblock group header (H1,H2) with an indication indicating said determined raster scan type.

8. Method for video encoding according to claim 7, wherein said step of determining a raster scan type within a macroblock group further comprises steps of

- comparing the encoding results of different raster scan types, wherein RDO is used for the comparing; and
- selecting the raster scan type with minimum RDO.

9. Method for video decoding, comprising steps of

- extracting (db1) from received video data at least one encoding unit that comprises a group of macroblocks and a macroblock group header (H1), wherein the macroblock group header (H1) comprises a raster scan type indication; and
- decoding (db2) the group of macroblocks, wherein intra prediction is used and wherein decoding order of the macroblocks within said group of macroblocks is determined by said raster scan type indication.

10. Method for video encoding according to claim 7 or 8, or method for video decoding according to claim 9, wherein for at least one macroblock bi-directional intra prediction is performed between two macroblocks opposite to each other.

11. Method for video encoding according to claim 7, 8 or 10, or method for video decoding according to claim 9 or 10, wherein a group of macroblocks comprises NxM macroblocks, with N being at least two macroblock lines or M being at least two macroblock columns.

12. Method according to one of the claims 7-11, wherein said macroblock header (H1) further comprises a start position indicating the position of the first macroblock.

13. Method for decoding according to claim 9, 10 or 11, wherein at least one of said macroblocks comprises a macroblock intra prediction indication that is unique only within the context of said macroblock, the method further comprising steps of

- determining for said at least one macroblock which neighbor macroblocks have already been reconstructed;
- depending on the available reconstructed neighbor blocks, determining from said macroblock intra prediction indication an intra prediction mode; and
- encoding or decoding the macroblock according to said determined intra prediction indication.

14. Encoded video signal, comprising at least one encoding unit (MBGU), the encoding unit comprising

- a header (H1,H2) comprising a raster scan type indication that refers to a macroblock group;
- a macroblock group comprising a plurality of encoded macroblocks, wherein the macroblocks are intra predicted and wherein the encoding order and/or decoding order of the macroblocks within said macroblock group is indicated by said raster scan type indication.

15. Encoded video signal according to claim 14, further comprising a plurality of encoding units (MBGU) and a higher order header (SH) that comprises a default raster scan type for said plurality of encoding units (MBGU), wherein the default raster scan type may be overruled by said encoding units' macroblock group header.

| | | | | | |
|---|---|---|---|---|---|
| $MB_1$ | $MB_2$ | ... | ... | MB | $MB_{eol}$ |
| ⋮ | ⋮ | | | ⋮ | ⋮ |
| ⋮ | ⋮ | | | ⋮ | ⋮ |
| $MB_{L1}$ | $MB_{L2}$ | ... | ... | MB | $MB_{Leol}$ |

**Fig.1**

| X | A | B | C | D | E | F | G | H |
|---|---|---|---|---|---|---|---|---|
| I | a | b | c | d | | | | |
| J | e | f | g | h | | | | |
| K | i | j | k | l | | | | |
| L | m | n | o | p | | | | |

**Fig.2**

a)

b)

Fig.3

None:no available neighbors

a)

left:left neighbors are available

b)

up: up neighbors are available

c)

Left-up: left and up neighbors are available

d)

Fig.4

None:no available
neighbors

2

| A | B |
| C | D |

2

a)

left:left neighbors are available

| R | A | B |
| R | C | D |

b)

up: up neighbors are available

| R | R |
| A | B |
| C | D |

c)

| | R | R |
| R | A | B |
| R | C | D |

Left-up: left and up neighbors are available

d)

Fig.5

a)    b)    c)    d)

**Fig.6**

a)    b)    c)    d)

**Fig.7**

a)    b)    c)    d)

**Fig.8**

a)    b)    c)    d)

**Fig.9**

| M | A | B | C | D | E | F | G | H |
|---|---|---|---|---|---|---|---|---|
| I | | | | | | | | |
| J | | | | | | | | |
| K | | | | | | | | |
| L | | | | | | | | |

a)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

b)

| M | A | B | C | D | E | F | G | H |
|---|---|---|---|---|---|---|---|---|
| I | | Mcar | | | | | | |
| J | | (A.D | | | | | | |
| K | | I.L | | | | | | |
| L | | E.H) | | | | | | |

c)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

d)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

e)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

f)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

g)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

h)

| M | A | B | C | D | E | F | G | H |
|---|---|---|---|---|---|---|---|---|
| I | | | | | | | | |
| J | | | | | | | | |
| K | | | | | | | | |
| L | | | | | | | | |

i)

k)

| A | B | C | D | M |
|---|---|---|---|---|
| | | | | I |
| | | | | J |
| | | | | K |
| | | | | L |

Fig.10

Fig.11

Fig.12

Fig.13

Fig.14

a)

b)

c)

d)

Fig.15

MBGU

S

SH   GH1   MBG1   GH2   MBG2

**Fig.16**

| MB$_{11}$ | MB$_{12}$ | MB$_{13}$ | MB$_{14}$ |
| MB$_{21}$ | MB$_{22}$ | MB$_{23}$ | MB$_{24}$ |
| MB$_{31}$ | MB$_{32}$ | MB$_{33}$ | MB$_{34}$ |
| MB$_{41}$ | MB$_{42}$ | MB$_{43}$ | MB$_{44}$ |

| MB$_{11}$ | MB$_{12}$ | MB$_{13}$ | MB$_{14}$ | MB$_{21}$ | MB$_{22}$ | MB$_{23}$ | MB$_{24}$ |

| MB$_{33}$ | MB$_{34}$ | MB$_{43}$ | MB$_{44}$ | MB$_{32}$ | MB$_{42}$ | MB$_{31}$ | MB$_{41}$ |

**a)**                    **b)**

**Fig.17**

eb1

Vin → define MB group | B

eb2

define raster scan order within the MB group | B | RDO

eb3

encode MB group

eb4

form stream, add headers → Venc

RST

TX

RX

db1

extract headers and MB groups

db2

Vdec ← decode MBs of MB group | B

RST

**Fig.18**

Europäisches
Patentamt

European
Patent Office

Office européen
des brevets

# EUROPEAN SEARCH REPORT

Application Number

EP 09 30 5060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/024345 A (THOMSON LICENSING [FR]; YIN PENG [US]; DIVORRA ESCODA OSCAR [US]; SU Y) 28 February 2008 (2008-02-28) | 1-3,7-9, 14 | INV. H04N7/26 |
| Y | * page 13, lines 25-27 *<br>* page 14, lines 25-32 *<br>* page 15, line 8 - page 16, line 21 *<br>* figures 4,5 *<br>* table 1 * | 4-6, 10-13,15 | |
| Y | TAICHIRO SHIODERA ET AL: "Block Based Extra/Inter-Polating Prediction for Intra Coding" IMAGE PROCESSING, 2007. ICIP 2007. IEEE INTERNATIONAL CONFERENCE ON, IEEE, PI, 1 September 2007 (2007-09-01), pages VI-445, XP031158358 ISBN: 978-1-4244-1436-9<br>* section 3 *<br>* figures 3,4 * | 4-6, 10-13,15 | |
| X | JP 2004 253826 A (MATSUSHITA ELECTRIC IND CO LTD) 9 September 2004 (2004-09-09)<br>* figures 6-10 *<br>* sections 3.5 and 3.6, pages 22-25 * | 1-3,7-9, 14 | TECHNICAL FIELDS SEARCHED (IPC)<br><br>H04N |

-/--

The present search report has been drawn up for all claims

| Place of search | Date of completion of the search | Examiner |
|---|---|---|
| The Hague | 20 August 2009 | Ferré, Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

**Application Number**

EP 09 30 5060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JVT: "Draft ITU-T Recommendation and Final Draft International Standard of Joint Video Specification (ITU-T Rec. H.264 ISO/IEC 14496-10 AVC)" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-G050r1, 14 March 2003 (2003-03-14), XP030005712 * page 83; table 8.1 * * sections 7.3.3, 8.2.2 and 8.3.2 * * page 55, lines 18-30 * * page 103; table 8.3 * ----- | 1,3,7,9, 14 | |
| A | XIONG L: "Adaptive intra slice coding" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-Q052, 11 October 2005 (2005-10-11), XP030006213 * sections 1 and 2 * * figure 3 * ----- | | |
| A | EP 1 956 847 A (MATSUSHITA ELECTRIC IND CO LTD [JP]) 13 August 2008 (2008-08-13) * figures 6-8,12 * * paragraphs [0054], [0069] - [0071], [0075] - [0077], [0085] - [0088] * ----- | | TECHNICAL FIELDS SEARCHED (IPC) |
| A | MURAKAMI T ET AL: "Adaptive Picture Flipping Coding for enhancing H.264/AVC" PROCEEDINGS OF THE PICTURE CODING SYMPOSIUM, XX, XX, 7 November 2007 (2007-11-07), pages 1-4, XP002461400 * sections 1, 2 and 3 * * figures 3,4; table 2 * ----- | | |

The present search report has been drawn up for all claims

| Place of search | Date of completion of the search | Examiner |
|---|---|---|
| The Hague | 20 August 2009 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 30 5060

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2009

| Patent document cited in search report | | Publication date | Patent family member(s) | | Publication date |
|---|---|---|---|---|---|
| WO 2008024345 | A | 28-02-2008 | NONE | | |
| JP 2004253826 | A | 09-09-2004 | NONE | | |
| EP 1956847 | A | 13-08-2008 | CN 101292537 A<br>WO 2007055158 A1<br>US 2009122864 A1 | | 22-10-2008<br>18-05-2007<br>14-05-2009 |